# EUROPEAN PATENT SPECIFICATION

(11) **EP 2 818 592 B1**
(45) Date of publication and mention of the grant of the patent: **21.06.2017**
(21) Application number: 14174027.4
(22) Date of filing: 26.06.2014
(51) Int. Cl.: D06F 39/00

(54) **Washing Machine**
Waschmaschine
Machine à laver

(30) Priority: 27.06.2013 KR 20130074377; 25.10.2013 KR 20130127647
(43) Date of publication of application: 31.12.2014
(73) Proprietor: Samsung Electronics Co., Ltd, Gyeonggi-do 16677 (KR)
(72) Inventor: Lee, Jung Hee, Gyeonggi-do (KR); Baek, Jae Ho, Seoul (KR); Lee, Hyo Sang, Gyeonggi-do (KR); Choi, Ji Hoon, Gyeonggi-do (KR); Jun, Kab Jin, Gyeonggi-do (KR); Han, Jeong Su, Gyeonggi-do (KR)
(74) Representative: Walaski, Jan Filip

(56) References cited:
- EP-A1- 2 322 705
- EP-A2- 2 594 677
- US-A1- 2011 219 551

## Description

The present invention relates to a washing machine, particularly to a washing machine in which the structure of a laundry weight sensing apparatus to sense the weight of laundry within a tub is enhanced.

In general, a washing machine (usually, a drum washing machine) includes a tub installed within a housing and receiving water containing detergent, a drum rotatably installed within the tub and washing laundry, and a door hinged to the front surface of a cabinet to open and closing an opening formed on the front surface of the cabinet. The washing machine washes the laundry by rotating the drum after laundry is placed into the drum through the opening of the cabinet and water containing detergent of a designated amount is supplied to the tub.

In such a washing machine, when a user selects a washing course, the amount of wash water is determined by sensing the weight of laundry within the tub, detergent and wash water of a sufficient amount to soak the laundry according to the determined amount of wash water are put into the tub, and then the drum is rotated, thus performing washing operation and rinsing operation.

In the washing machine, if the weight of the laundry is correctly sensed, wash water required according to the weight of the laundry is supplied, and then the laundry may be washed. Therefore, the amounts of used wash water and electricity may be reduced and thus, energy consumption may be reduced. An example of such a machine is shown in US2011/219551, which has a weight detection module.

Conventionally, the weight of the laundry is deduced by measuring the amount of load applied to a motor of the washing machine. However, in this case, an error may occur according to surrounding environments. Therefore, it is an aspect of the present disclosure to provide a washing machine which may reduce an error of the weight of laundry within a tub.

According to an aspect of the present invention, there is provided a washing machine according to claim 1. Optional features are set out in the dependent claims.

Additional aspects of the disclosure will be set forth in part in the description which follows and, in part, will be apparent from the description, or may be learned by practice of the disclosure.

In accordance with one aspect of the present disclosure, a washing machine includes a cabinet, a tub provided within the cabinet, a support member provided with one end combined with the tub and the other end combined with the cabinet so as to support the tub to the cabinet, and a laundry weight sensing apparatus provided with one side combined with the support member to use load of the tub transmitted to the support member so as to sense the weight of laundry within the tub, and the other side contacting one surface of the cabinet to prevent impact transmitted from the tub.

The laundry weight sensing apparatus may include a deformation measurement unit to measure a deformation degree of the support member.

The laundry weight sensing apparatus may further include a controller receiving the deformation degree of the support member, measured by the deformation measurement unit, and calculating the weight of the laundry within the tub.

The deformation measurement unit may include a deformation member contacting at least one surface of the cabinet, at least a part of the deformation member being deformed by deformation of the support member, and at least one strain gauge combined with the deformation member.

The at least one strain gauge may be combined with one surface of the deformation member so as to measure at least one of tension and compression of the deformation member.

The at least a part of the deformation member may include a first combination part separated from the cabinet so that the at least a part of the deformation member is strained or compressed due to the load of the support member.

The deformation member may include a body part with which the support member is combined, and a head part bending from the body part and combined with the cabinet.

The deformation measurement unit may be combined with a bracket provided on one surface of the cabinet.

The bracket may include a depression part having a narrow width formed at a part of the bracket corresponding to the first combination part so that the first combination part is separated from the cabinet and has mobility.

The first combination part may bend upward so as to be separated from the cabinet. The first combination part may include a combination hole through which the support member passes.

The washing machine may further include a first fixing member located between the cabinet and the deformation member so as to fix the deformation member.

The washing machine may further include a second fixing member combined with the deformation member so as to fix the support member.

The deformation measurement unit may be combined with the upper surface of the cabinet.

In accordance with another aspect of the present disclosure, a washing machine includes a cabinet, a tub provided within the cabinet, a support member provided with one end combined with the tub and the other end combined with the cabinet so as to support the tub to the cabinet, a deformation member combined with one side of the cabinet and configured such that at least a part of the deformation member is deformable so as to recognize elastic motion of the support member by the weight of laundry within the tub, and at least one strain gauge combined with one surface of the deformation member so as to measure at least one of tension and compression of the deformation member, wherein the at least a part of the deformation member bends so as to be separated from the cabinet.

The washing machine may further include a controller receiving a deformation degree of the deformation member, measured by the at least one strain gauge, calculating the weight of the laundry within the tub, and controlling at least one of the amount of detergent, the amount of wash water, and a washing time required according to the weight of the laundry.

The deformation member may be combined with a bracket provided on one surface of the cabinet, and the bracket may include a depression part provided with a designated space so that the at least a part of the deformation member is separated from the cabinet and has mobility.

The at least a part of the deformation member may bend upward so as to be separated from the cabinet.

The washing machine may further include a buffer member formed of a flexible material to relieve impact between the deformation member and the support member.

In accordance with a further aspect of the present disclosure, a washing machine includes a cabinet, a tub provided within the cabinet, a support member provided with one end combined with the tub and the other end combined with the cabinet so as to support the tub to the cabinet, a deformation member provided with one side combined with the cabinet and the other side contacting the support member so as to measure a deformation degree of the support member, and at least one strain gauge combined with one surface of the deformation member so as to measure a deformation degree of the deformation member, wherein the deformation member includes a head part hung to a combination hole of the cabinet.

The deformation member may further include a body part contacting the support member and the head part may extend from the body part.

The washing machine may further include a first fixing member located between the cabinet and the deformation member and configured such that the head part passes through the first fixing member and is combined with the cabinet.

The washing machine may further include a second fixing member combined with the deformation member to fix the support member.

According to another aspect of the invention, there is provided a washing machine comprising a cabinet, a tub provided within the cabinet, a support member for supporting the tub and a laundry weight sensing apparatus having a first portion attached to the support member and a second portion attached to the cabinet, the laundry weight sensing apparatus being configured to use load of the tub transmitted to the support member to sense the weight of laundry within the tub. The first portion may be a movable or deformable portion and the second portion may be fixed to the cabinet, so that relative movement between the first and second portions can be measured, for example by a strain gauge, to determine the weight of laundry within the tub.

These and/or other aspects of the disclosure will become apparent and more readily appreciated from the following description of the embodiments, taken in conjunction with the accompanying drawings in which:
FIG. 1 is a longitudinal-sectional view illustrating the schematic configuration of a washing machine in accordance with one embodiment of the present disclosure;
FIG. 2 is an enlarged view of the essential portion of the washing machine in accordance with the embodiment of the present disclosure;
FIG. 3 is a perspective view illustrating a laundry weight sensing apparatus in accordance with one embodiment of the present disclosure;
FIG. 4 is an exploded perspective view illustrating the laundry weight sensing apparatus in accordance with the embodiment of the present disclosure;
FIG. 5 is a graph illustrating weights of laundry measured using the laundry weight sensing apparatus in accordance with the embodiment of the present disclosure;
FIG. 6 is a perspective view illustrating a laundry weight sensing apparatus in accordance with another embodiment of the present disclosure;
FIG. 7 is an exploded perspective view illustrating the laundry weight sensing apparatus in accordance with the embodiment of the present disclosure;
FIG. 8 is a perspective view illustrating a laundry weight sensing apparatus in accordance with yet another embodiment of the present disclosure;
FIG. 9 is an exploded perspective view illustrating the laundry weight sensing apparatus in accordance with the embodiment of the present disclosure; and
FIG. 10 is a perspective view illustrating a deformation measurement unit in accordance with the embodiment of the present disclosure.

Reference will now be made in detail to the embodiments of the present invention, examples of which are illustrated in the accompanying drawings, wherein like reference numerals refer to like elements throughout. Hereinafter, a drum washing machine will be exemplarily illustrated, but embodiments of the present invention are not limited thereto.

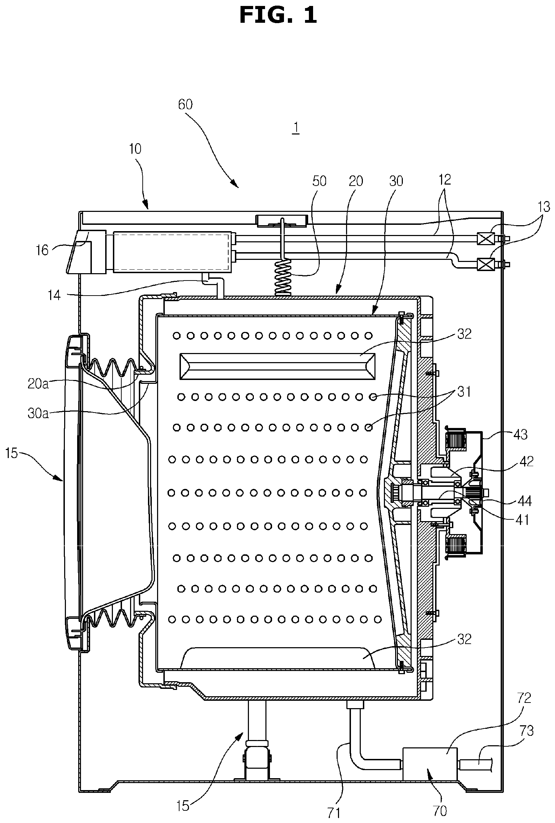

FIG. 1 is a longitudinal-sectional view illustrating the schematic configuration of a washing machine in accordance with one embodiment.

As exemplarily shown in FIG. 1, a washing machine 1 includes a cabinet 10 forming the external appearance of the washing machine 1, a tub 20 disposed within the cabinet 10, a drum 30 rotatably disposed within the tub 20, and a motor 43 driving the drum 30.

Inlets 20a and 30a are formed on the front surfaces of the tub 20 and the drum 30 by opening a part of the central area of each of the front surfaces of the tub 20 and the drum 30 so that a user may put laundry into the washing machine 1 and take laundry out of the washing machine 1 through the inlets 20a and 30a, and a door 15 rotated with respect to the front surface of the cabinet 10 to open and close the inlets 20a and 30a is installed on the front surface of the cabinet 10.
The tub 20 may be supported to (mounted to) the cabinet 10 by at least one support member. As the at least one support member, an elastic member 50, such as a spring, or a damping member 15, such as an oil damper, may be used. The support members 50 and 15 may absorb vibration or impact of the tub 20 and the drum 30 generated by the motor 43. As exemplarily shown in FIG. 1, the elastic member 50 supports the tub 20 from above, and the damping member 15 supports the tub 20 from below. Hereinafter, the elastic member 50 will be exemplarily described as the support member used in one embodiment of the present disclosure, but embodiments of the present disclosure are not limited thereto.

Water supply pipes 12 to supply wash water to the tub 20 are installed above the tub 20. One end of each of the water supply pipes 12 is connected to an external water supply source (not shown), and the other end of each of the water supply pipes 12 is connected to a detergent supply device 16. The detergent supply device 16 is connected to the tub 20 through a connection pipe 14. Water supplied through the water supply pipes 12 passes through the detergent supply device 16 and then, the water together with detergent is supplied to the inside of the tub 20. Water supply valves 13 to open and close the water supply pipes 12 may be combined with (mounted to) the water supply pipes 12.

A driving shaft 41 to transmit power of the motor 43 is connected to the rear surface of the drum 30. A plurality of through holes 31 for circulation of wash water is formed through the circumferential surface of the drum 30. A plurality of lifters 32 is installed on the inner circumferential surface of the drum 30 so as to tumble laundry when the drum 30 is rotated.

The driving shaft 41 is disposed between the drum 30 and the motor 43. One end of the driving shaft 41 is connected to a rear plate of the drum 30, and the other end of the driving shaft 41 is extended to the outside of the rear wall of the tub 20. When the motor 43 drives the driving shaft 41, the drum 30 connected to the driving shaft 41 is rotated about the driving shaft 41.

A bearing housing 42 is installed on the rear plate of the tub 20 so as to rotatably support the driving shaft 41. The bearing housing 42 may be formed of an aluminum alloy and be inserted into the rear wall of the tub 20 when the tub 20 is formed through injection molding. Bearings 44 are installed between the bearing housing 42 and the driving shaft 41 so as to smoothly rotate the driving shaft 41.

A drain unit 70 to discharge water within the tub 20 to the outside of the cabinet 10 may be located below the tub 20. The drain unit 70 includes a drain pump 72, and a connection hose 71 connecting the tub 20 and the drain pump 72 so that water within the tub 20 may be introduced into the drain pump 72. The drain unit 70 may further include a drain hose 73 to discharge water from the drain pump 72 to the outside.

If a user desires to perform washing, the user may open the door 15 and put laundry into the drum 30 and, after washing has been completed, the user may open the door 15 and withdraw the laundry from the drum 30.

Therefore, the washing machine 1 may include a laundry weight sensing apparatus 60 which may measure the weight of laundry. The laundry weight sensing apparatus 60 is combined with the support member 50 (for example a tub suspension spring) and thus, may calculate the weight of laundry within the tub 30 through a deformation degree of the support member 50 changed according to load of the tub 30. This will be described later.

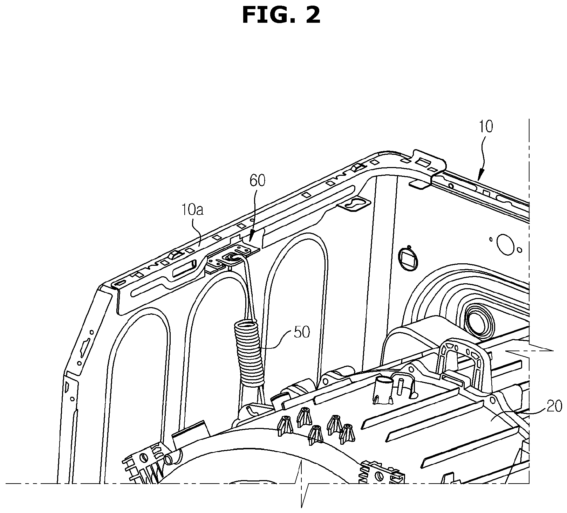

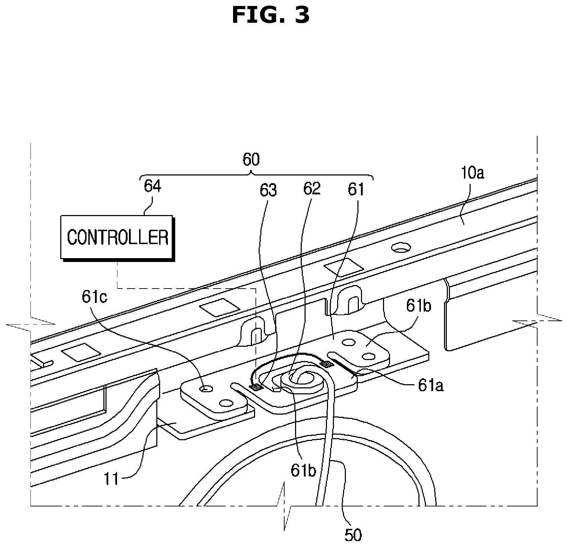

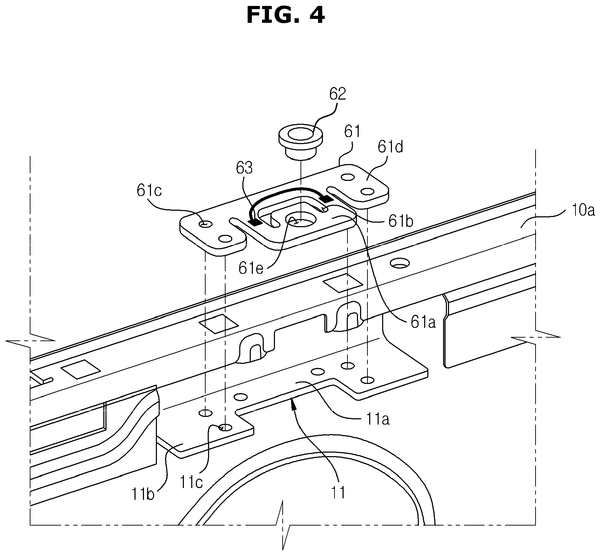

FIG. 2 is an enlarged view of the essential portion of the washing machine in accordance with the embodiment of the present disclosure, FIG. 3 is a perspective view illustrating the laundry weight sensing apparatus in accordance with one embodiment of the present disclosure, and FIG. 4 is an exploded perspective view illustrating the laundry weight sensing apparatus in accordance with the embodiment of the present disclosure.

As exemplarily shown in FIGS. 2 to 4, the laundry weight sensing apparatus 60 may be combined with one surface of the cabinet 10, for example mounted to a surface of the cabinet. In more detail, the laundry weight sensing apparatus 60 may include a deformation measurement unit to measure a deformation degree of the support member 50. The deformation measurement unit may include a deformation member 61 configured such that at least a part of the deformation member 61 is deformable by deformation of the support member 50, and strain gauges 63 combined with the deformation member 61 and measuring the deformation degree of the deformation member 61. The laundry weight sensing apparatus 60 may further include a controller 64 receiving the deformation degree of the support member 50 from the deformation measurement unit and calculating the weight of the laundry within the tub 30.

In accordance with one embodiment of the present disclosure, the deformation member 61 is configured so as to contact a part 10a of the cabinet 10. As exemplarily shown in the drawings, the deformation member 61 is mounted to a bracket 11 protruding toward the inside of the cabinet 10 using fastening members (not shown).

The deformation member 61 includes a first combination part 61a with which the support member 50 is combined (ie. to which the support member 50 is mounted). The first combination part 61a is connected to the rest of the deformation member, which is fixed to the cabinet, in a way that allows flexing of the first combination part. This serves to cause the first combination part 61a of the deformation member 61 to have mobility so that the strain gauges 63 may measure the deformation degree of the deformation member 61 deformed by the support member 50. In accordance with one embodiment of the present disclosure, in order to cause the first combination part 61a to have mobility to the cabinet 10, ie. to move relative to the cabinet, the bracket 11 may include a depression part 11a having a narrow width formed at at least a portion of the bracket 11. The depression part 11a is provided at a position corresponding to the first combination part 61a and thus, the first combination part 61a may have mobility. The depression part 11a is provided at the center of the bracket 11, and support parts 11b to support the deformation member 61 are provided at both sides of the bracket 11.

In other words, the deformation member 61 is provided in two parts, the second part (61d) being fixed to a bracket 11 of the cabinet by fixing members (eg. nuts and bolts) and the first part (61a) being attached to the second part by relatively narrow members that allow flexing of the first part (61a) relative to the second part (61d). The bracket 11 has a cut-out in the area of first part so that the first part protrudes over the cut-out, allowing movement of the first part relative to the second part without interference from the bracket. A hook from the support member 50 is inserted into a hole 61e in the first part 61a to attach the support member to the first part and, via the first part, to the cabinet.

Fastening holes 11c to combine the deformation member 61 with the bracket 11 are provided at the support parts 11b. The fastening holes 11c of the supports parts 11b are provided at positions corresponding to fastening holes 61c of the deformation member 61, and the deformation member 61 is combined with the bracket 11 by fastening members (not shown) passing through the fastening holes 61c of the deformation member 61 and the fastening hole 11c of the support parts 11b.

The first combination part 61a is provided at the center of the deformation member 61 and thus, second combination parts 61d provided at both sides of the deformation member 61 are fastened to the bracket 11 by the fastening members (not shown). The first combination part 61a may more protrude than the second combination parts 61d and thus, have mobility. Further, a slit 61b may be provided within the first combination part 61a and thus, the deformation member 61 may be deformed according to movement of the support member 50. A combination hole 61e with which the support member 50 is combined is provided at one side of the first combination part 61a. The support member 50 passes through the combination hole 61e and is thus attached to the deformation member 61. The fastening holes 61c with which the fastening members (not shown) are combined may be provided at the second combination parts 61d.

At least one strain gauge 63 to measure the deformation degree of the deformation member 61 may be provided to the deformation member 61. The strain gauge 63 may be mounted on one surface of the deformation member 61 so as to measure at least one of tension and compression of the deformation member 61. In accordance with one embodiment of the present disclosure, strain gauges 63 are combined with both sides of the first combination part 61a of the deformation member 61 and measure a tension degree of the deformation member 61. The strain gauge 63 may include electric wires provided at both ends thereof and thus, output electric resistance corresponding to physical deformation of the deformation member 61. Consequently, since the output value of electrical resistance of the strain gauge 63 is changed in proportion to the deformation degree of the deformation member 61, the deformation degree of the deformation member 61 may be measured through the output value of the electrical resistance of the strain gauge 63.

The controller 64 may be electrically connected to the strain gauges 63. Therefore, the controller 64 may sense the weight of laundry through reverse conversion of the output value of electrical resistance of the strain gauges 63. The reason for this is that the output value of electrical resistance of the strain gauges 63 is proportional to the deformation degree of the deformation member 61, the deformation degree of the deformation member 61 is proportional to the deformation degree of the support member 50, and the deformation degree of the support member 50 is proportional to the weight of laundry.

The laundry weight sensing apparatus 60 may further include a buffer member 62 to relieve impact between the deformation member 61 and the support member 50. The buffer member 62 may be formed of a flexible material, such as rubber, and thus, relieve impact generated due to shaking of the deformation member 61 and the support member 50 caused by vibration of the tub 20. The buffer member 62 may be inserted into the combination hole 61e of the deformation member 61, and the support member 50 may pass through the combination hole 61e after insertion of the buffer member 62 into the combination hole 61e.

In accordance with one embodiment of the present disclosure, since the support member 50 is combined with the deformation member 61 in a state in which the deformation member 61 is combined with the cabinet 10 and supported by the cabinet 10, transmission of impact, generated by operation of the tub 20, to the laundry weight sensing apparatus 60 may be reduced and thus, an error generated during a process of measuring the weight of laundry may be prevented.

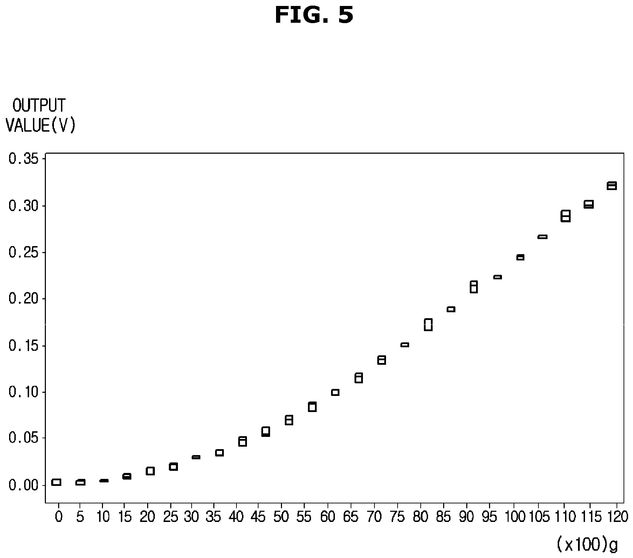

FIG. 5 is a graph illustrating weights of laundry measured using the laundry weight sensing apparatus in accordance with the embodiment of the present disclosure.

As exemplarily shown in FIG. 5, the laundry weight sensing apparatus 60 in accordance with the embodiment of the present disclosure may measure the weight of laundry within the tub 20 using the output value of the strain gauge 63. Further, in the graph shown in FIG. 5, the x-axis represents the weight of laundry and the y-axis represents the output value of the strain gauge 63. A conventional laundry weight sensing apparatus has a large error range of 3∼4kg in measurement of the weight of laundry at the same output value, but the laundry weight sensing apparatus 60 in accordance with one embodiment of the present disclosure has a small error range of 500g in measurement of the weight of laundry at the same output value. The conventional laundry weight sensing apparatus measures the weight of laundry through the load of a motor and has a high possibility of generating an error according to whether or not the washing machine 1 is operated, but the laundry weight sensing apparatus 60 in accordance with the embodiment of the present disclosure may measure the weight of laundry within the tub 20 regardless of whether or not the washing machine 1 is operated.

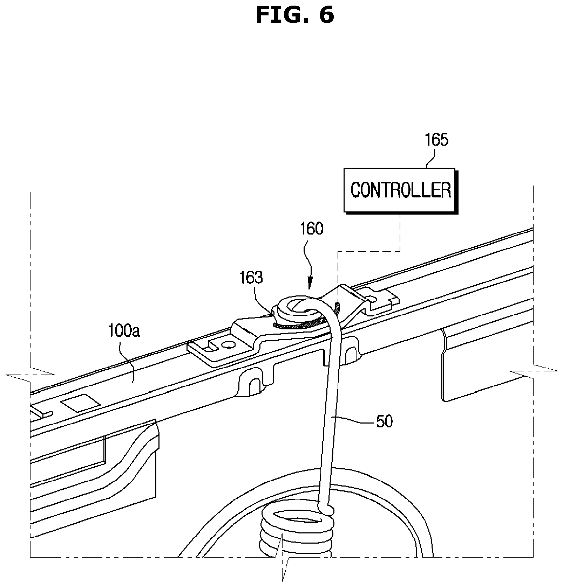

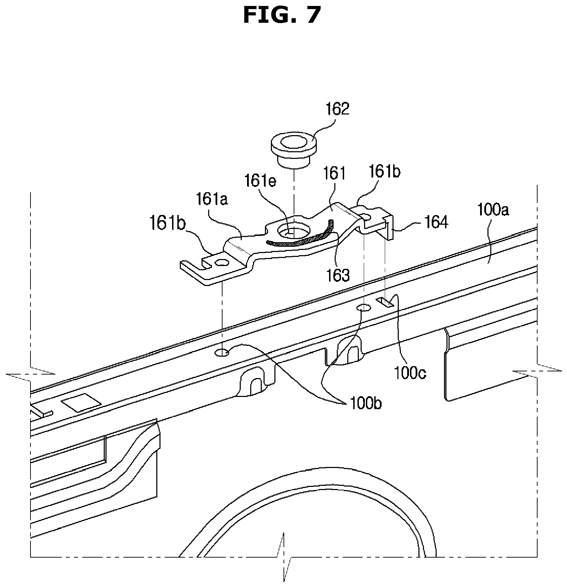

FIG. 6 is a perspective view illustrating a laundry weight sensing apparatus in accordance with another embodiment of the present disclosure, and FIG. 7 is an exploded perspective view illustrating the laundry weight sensing apparatus in accordance with the embodiment of the present disclosure.

As exemplarily shown in FIGS. 6 and 7, a laundry weight sensing apparatus 160 may be combined with an upper surface 100a of a cabinet 100. A deformation member 161 of the laundry weight sensing apparatus 160 may be combined with the upper surface 100a of the cabinet 100. The deformation member 161 may include a first combination part 161a with which the support member 50 is combined. The first combination part 161a may be bent upwards relative to the rest of the deformation member. Thereby, the first combination part 161a is separated from the cabinet 100 by a designated interval and thus, may have mobility. Since the first combination part 161a bends upward, the deformation member 161 may have mobility without a separate slit.

The deformation member 161 may include a combination hole 161e through which the support member 50 and buffer member 162 pass. A through hole (not shown) through which the support member 50 passes may be provided on the upper surface 100a of the cabinet 100 at a position corresponding to the combination hole 161e. Thereby, the support member 50 may pass through the combination hole 161e and the through hole (not shown) and be combined with the cabinet 100.

The deformation member 161 includes second combination parts 161b formed at both sides of the first combination part 161a and combined with the cabinet 100. The second combination parts 161b are fixed to the cabinet 100. The second combination parts 161b may include a bending part 164 which bends to be inserted into the upper surface 100a of the cabinet 100. At least one bending part 164 may be provided, and in FIGS. 6 and 7, one bending part 164 is provided. The bending part 164 is inserted into an insertion hole 100c provided on the upper surface 100a of the cabinet 100. Thereby, combining force between the deformation member 161 and the cabinet 100 may be increased. Fastening holes 100b may be provided on the upper surface 100a of the cabinet 100 at positions corresponding to fastening holes of the second combination parts 161b, and the deformation member 161 and the cabinet 100 may be combined by inserting fastening members (not shown) into the fastening holes 100b and the fastening holes of the second combination parts 161b.

A strain gauge 163 to measure the deformation degree of the deformation member 161 may be combined with one side of the deformation member 161. The strain gauge 163 is combined with the upper surface of the deformation member 161 and may be electrically connected to a controller 165, as exemplarily shown in FIGS. 6 and 7, but embodiments of the present disclosure are not limited thereto. That is, the strain gauge 163 may be combined with the lower surface of the deformation member 161 or be combined with both the upper and lower surfaces of the deformation member 161. If the strain gauge 163 is combined with the upper surface of the deformation member 161, the support member 50 sags downward due to load of laundry and thus, the upper surface of the deformation member 161 is strained and the strain gauge 163 may measure a tension degree of the deformation member 161. If the strain gauge 163 is provided on the lower surface on the deformation member 161, the lower surface of the deformation member 161 is compressed by load of the laundry contrary to the upper surface of the deformation member 161 and thus, the strain gauge 163 may measure such a compression degree of the deformation member 161. Therefore, if the strain gauges 163 are provided on both the upper and lower surfaces of the deformation member 161, the strain gauges 163 measure both the tension degree and the compression degree of the deformation member 161 and may thus more correctly measure the weight of the laundry.

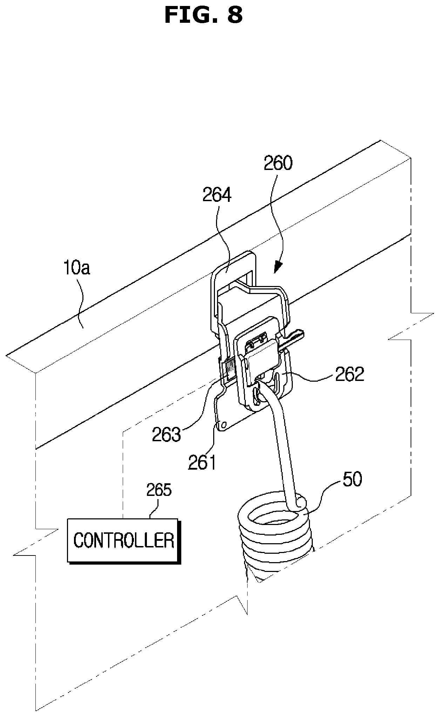

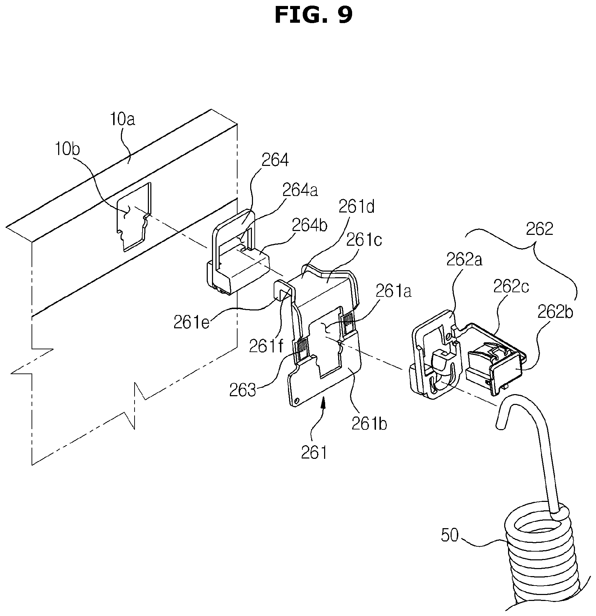

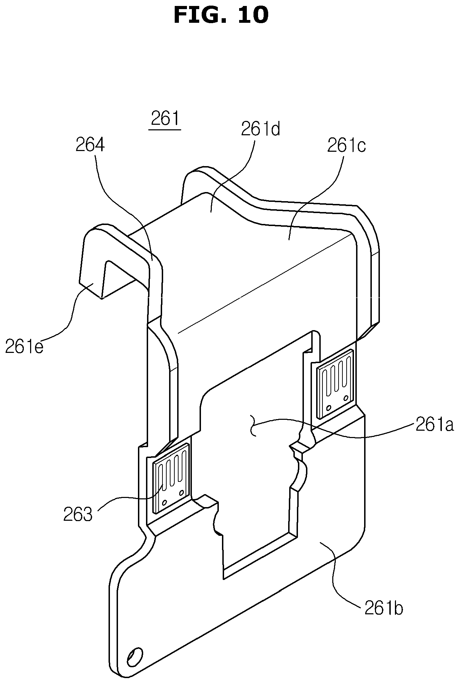

FIG. 8 is a perspective view illustrating a laundry weight sensing apparatus in accordance with yet another embodiment of the present disclosure, and FIG. 9 is an exploded perspective view illustrating the laundry weight sensing apparatus in accordance with the embodiment of the present disclosure, and FIG. 10 is a perspective view illustrating a deformation measurement unit in accordance with the embodiment of the present disclosure.

As exemplarily shown in FIGS. 8 to 10, a laundry weight sensing apparatus 260 in accordance with this embodiment of the present disclosure contacts one surface 10a of a cabinet 10.

The laundry weight sensing apparatus 260 may include a deformation measurement unit. The deformation measurement unit may include a deformation member 261 configured such that at least a designated part of the deformation member 261 is deformable by receiving load of the support member 50, and strain gauges 263 measuring the deformation degree of the deformation member 261. In accordance with one embodiment of the present disclosure, the deformation member 261 may contact at least one surface of the cabinet 10. The strain gauges 263 may contact one surface of the deformation member 261.

Further, the laundry weight sensing apparatus 260 may further include a controller 265 receiving the deformation degree of the deformation member 261, calculating the weight of the laundry within the tub 30, and controlling at least one of the amount of detergent, the amount of wash water, and a washing time required according to the weight of the laundry.

In accordance with one embodiment of the present disclosure, the deformation member 261 may include a body part 261b and a head part 261c extending from the body part 261b. The head part 261c may bend from the body part 261b. The head part 261c may pass through a through hole provided on one surface 10a of the cabinet 10 and thereby, the deformation member 261 may be combined with the cabinet 10.

Ribs 261f strengthening the head part 261c may be provided on the head part 261c. The ribs 261f may be provided at the edges of the head part 261c. The head part 261c may include a penetration part 261d having a narrow width so as to be inserted into the through hole 10b. The head part 261c may further include a hanger part 261e by which the deformation member 261 is hung to the through hole 10b. In accordance with one embodiment of the present disclosure, the hanger part 261e may extend from the penetration part 261d.

A combination hole 261a through which the support member 50 passes so as to pass through the through hole 10b of the cabinet 10 may be provided on the body part 261a. In accordance with one embodiment of the present disclosure, the strain gauges 263 are combined with the combination hole 261a, but embodiments of the present disclosure are not limited thereto.

The laundry weight sensing apparatus 260 may further include a first fixing member 264 located between the cabinet 10 and the deformation member 261 so as to fix the deformation member 261. The first fixing member 264 may be inserted into the through hole 10b. A part of the first fixing member 264 inserted into the through hole 10b is defined as a combination part 264b. The first fixing member 264 may be combined with the cabinet 10 by inserting at least a portion of the combination part 264b into the through hole 10b. The first fixing member 264 may include a first fixing member hole 264a overlapping with the through hole 10b so that the support member 50 passes through the first fixing member hole 264a and is combined with the through hole 10b.

The laundry weight sensing apparatus 260 may further include a second fixing member 262 combined with the deformation member 261 to fix the support member 50. The deformation member 261 may be located between the first fixing member 264 and the second fixing member 262. The second fixing member 262 may be inserted into the combination hole 261a of the deformation member 261. The second fixing member 262 may include a combination part 262a combined with the combination hole 261a, and a holder 262b fixing the support member 50. In accordance with one embodiment of the present disclosure, the combination part 262a and the holder 262b are connected using a connection member 262c, but embodiments of the present disclosure are not limited thereto. That is, the holder 262b may be manufactured as a separate member and be combined with the combination part 262a. Thereby, the second fixing member 262 may fix the support member 50 by inserting the support member 50 into the second fixing member 262 and then combining the holder 262b with the combination part 262a.

The first fixing member 264 is inserted into the through hole 10b of the cabinet 10 and the deformation member 261 is combined with the first fixing member 264. The second fixing member 262 may be combined with the deformation member 261 and the support member 50 may be inserted into the cabinet 10 so as to pass through the through hole 10b. Thereafter, the holder 262b of the second fixing member 262 is combined with the combination part 262a, thus fixing the support member 50.

As is apparent from the above description, a washing machine in accordance with one embodiment of the present disclosure may precisely measure the weight of laundry without influence of surrounding environments. Further, the washing machine fixes a laundry weight sensing apparatus to a cabinet and may thus, prevent an error generated due to transmission of vibration caused by operation of a tub.

Although a few embodiments of the present invention have been shown and described, it would be appreciated by those skilled in the art that changes may be made in these embodiments without departing from the principles of the invention, the scope of which is defined in the claims.

## Claims

1. A washing machine (1) comprising:
a cabinet (10, 00);
a tub (20) provided within the cabinet;
a support member (50, 15) for supporting the tub; and
a laundry weight sensing apparatus (60, 160, 260), the laundry weight sensing apparatus being configured to use load of the tub transmitted to the support member to sense the weight of laundry within the tub, the laundry weight sensing apparatus comprising:
a deformation measurement unit, wherein the deformation measurement unit comprises:
a deformation member (61, 161, 261) contacting at least one surface (10a) of the cabinet and the support member to measure a deformation degree of the support member, at least a part (61a) of the deformation member being deformed by deformation of the support member; and
at least one strain gauge (63, 163, 263) combined with the deformation member.

2. The washing machine according to claim 1, wherein the laundry weight sensing apparatus further includes a controller (64, 165, 264) receiving the deformation degree of the support member, measured by the deformation measurement unit, to calculate the weight of the laundry within the tub.

3. The washing machine according to claim 1 or claim 2, wherein the at least one strain gauge is combined with one surface of the deformation member so as to measure at least one of tension and compression of the deformation member.

4. The washing machine according to any one of the preceding claims, wherein the at least a part of the deformation member includes a first combination part (61a, 161a, 262a, 264b) separated from the cabinet so that the at least a part of the deformation member is strained or compressed due to the load of the support member.

5. The washing machine according to any one of the preceding claims, wherein the deformation member includes a body part (261b) with which the support member is combined, and a head part (261c) bending from the body part and combined with the cabinet.

6. The washing machine according to claim 4 or 5, wherein the deformation measurement unit is combined with a bracket (11) provided on one surface of the cabinet.

7. The washing machine according to claim 6, wherein the bracket includes a depression part (11a) having a narrow width formed at a part of the bracket corresponding to the first combination part so that the first combination part is separated from the cabinet and has mobility.

8. The washing machine according to any one of claims 4 to 7, wherein the first combination part bends upward so as to be separated from the cabinet.

9. The washing machine according to any one of claims 4 to 8, wherein the first combination part includes a combination hole (61e, 161e, 261a) through which the support member passes.

10. The washing machine according to any one of claims 5 to 9, further comprising a first fixing member (264) located between the cabinet and the deformation member so as to fix the deformation member.

11. The washing machine according to any one of claims 5 to 10, further comprising a second fixing member (262) combined with the deformation member so as to fix the support member.

12. The washing machine according to any one of the preceding claims, wherein the deformation measurement unit is combined with an upper surface (100a) of the cabinet.

## Patentansprüche

1. Waschmaschine (1), die Folgendes aufweist:
ein Gehäuse (10, 100);
einen Bottich (20), der in dem Gehäuse bereitgestellt ist;
ein Trägerelement (50, 15) zum Tragen des Bottichs und
eine Waschgutgewichtserfassungsvorrichtung (60, 160, 260), wobei die Waschgutgewichtserfassungsvorrichtung zur Verwendung von auf das Trägerelement übertragener Belastung des Bottichs zur Erfassung des Gewichts von Waschgut im Bottich konfiguriert ist, wobei die Waschgutgewichtserfassungsvorrichtung Folgendes aufweist:
eine Verformungsmesseinheit, wobei die Verformungsmesseinheit Folgendes aufweist:
ein Verformungselement (61, 161, 261), das mit wenigstens einer Oberfläche (10a) des Gehäuses und dem Trägerelement in Kontakt ist, um einen Verformungsgrad des Trägerelements zu messen, wobei wenigstens ein Teil (61a) des Verformungselements durch Verformung des Trägerelements verformt wird; und
wenigstens einen Dehnungsmessstreifen (63, 163, 263), der mit dem Verformungselement kombiniert ist.

2. Waschmaschine nach Anspruch 1, wobei die Waschgutgewichtserfassungsvorrichtung ferner eine Steuereinheit (64, 165, 264), die den von der Verformungsmesseinheit gemessenen Verformungsgrad des Trägerelements empfängt, zum Berechnen des Gewichts des Waschguts im Bottich beinhaltet.

3. Waschmaschine nach Anspruch 1 oder Anspruch 2, wobei der wenigstens eine Dehnungsmessstreifen mit einer Oberfläche des Verformungselements kombiniert ist, um Zugspannung und/oder Stauchung des Verformungselements zu messen.

4. Waschmaschine nach einem der vorhergehenden Ansprüche, wobei der wenigstens eine Teil des Verformungselements einen ersten Kombinationsteil (61a, 161a, 262a, 264b) beinhaltet, der von dem Gehäuse getrennt ist, sodass der wenigstens eine Teil des Verformungselements aufgrund der Belastung des Trägerelements gedehnt oder gestaucht wird.

5. Waschmaschine nach einem der vorhergehenden Ansprüche, wobei das Verformungselement ein Körperstück (261b), mit dem das Trägerelement kombiniert ist, und ein Kopfstück (261c), das sich vom Körperstück biegt und mit dem Gehäuse kombiniert ist, beinhaltet.

6. Waschmaschine nach Anspruch 4 oder 5, wobei die Verformungsmesseinheit mit einer an einer Oberfläche des Gehäuses bereitgestellten Halterung (11) kombiniert ist.

7. Waschmaschine nach Anspruch 6, wobei die Halterung einen Aussparungsteil (11a) mit einer schmäleren Breite beinhaltet, der an einem Teil der Halterung ausgebildet ist, der dem ersten Kombinationsteil entspricht, sodass der erste Kombinationsteil vom Gehäuse getrennt ist und Mobilität aufweist.

8. Waschmaschine nach einem der Ansprüche 4 bis 7, wobei der erste Kombinationsteil sich nach oben biegt, um vom Gehäuse getrennt zu sein.

9. Waschmaschine nach einem der Ansprüche 4 bis 8, wobei der erste Kombinationsteil ein Kombinationsloch (61e, 161e, 261a) beinhaltet, durch welches das Trägerelement verläuft.

10. Waschmaschine nach einem der Ansprüche 5 bis 9, die ferner ein erstes Befestigungselement (264) aufweist, das sich zwischen dem Gehäuse und dem Verformungselement befindet, um das Verformungselement zu befestigen.

11. Waschmaschine nach einem der Ansprüche 5 bis 10, das ferner ein zweites Befestigungselement (262) aufweist, das mit dem Verformungselement kombiniert ist, um das Trägerelement zu befestigen.

12. Waschmaschine nach einem der vorhergehenden Ansprüche, wobei die Verformungsmesseinheit mit einer oberen Oberfläche (100a) des Gehäuses kombiniert ist.

## Revendications

1. Machine à laver (1) comprenant :
une carrosserie (10, 100) ;
une cuve (20) fournie à l'intérieur de la carrosserie ;
un élément de support (50, 15) pour soutenir la cuve ; et
un appareil de détection de poids de linge (60, 160, 260), l'appareil de détection de poids de linge étant conçu pour utiliser la charge de la cuve transmise à l'élément de support pour détecter le poids du linge à l'intérieur de la cuve, l'appareil de détection de poids de linge comprenant :
une unité de mesure de déformation, dans laquelle l'unité de mesure de déformation comprend :
un élément de déformation (61, 161, 261) entrant en contact avec au moins une surface (10a) de la carrosserie et l'élément de support pour mesurer un degré de déformation de l'élément de support, au moins une partie (61a) de l'élément de déformation étant déformée par la déformation de l'élément de support ; et
au moins une jauge de déformation (63, 163, 263) combinée à l'élément de déformation.

2. Machine à laver selon la revendication 1, dans laquelle l'appareil de détection de poids de linge comprend en outre un dispositif de commande (64, 165, 264) recevant le degré de déformation de l'élément de support, mesuré par l'unité de mesure de déformation, pour calculer le poids du linge à l'intérieur de la cuve.

3. Machine à laver selon la revendication 1 ou 2, dans laquelle la au moins une jauge de déformation est combinée à une surface de l'élément de déformation afin de mesurer au moins une parmi la tension et la compression de l'élément de déformation.

4. Machine à laver selon l'une quelconque des revendications précédentes, dans laquelle la au moins une partie de l'élément de déformation comprend une première partie de combinaison (61a, 161a, 262a, 264b) séparée de la carrosserie de sorte que la au moins une partie de l'élément de déformation soit étirée ou comprimée sous l'effet de la charge de l'élément de support.

5. Machine à laver selon l'une quelconque des revendications précédentes, dans laquelle l'élément de déformation comprend une partie de corps (261b) à laquelle l'élément de support est combiné, et une partie de tête (261c) s'incurvant par rapport à la partie de corps et combinée à la carrosserie.

6. Machine à laver selon la revendication 4 ou 5, dans laquelle l'unité de mesure de déformation est combinée à un support (11) fourni sur une surface de la carrosserie.

7. Machine à laver selon la revendication 6, dans laquelle le support comprend une partie en creux (11a) de largeur étroite, formée au niveau d'une partie du support correspondant à la première partie de combinaison de sorte que la première partie de combinaison soit séparée de la carrosserie et présente une certaine mobilité.

8. Machine à laver selon l'une quelconque des revendications 4 à 7, dans laquelle la première partie de combinaison s'incurve vers le haut afin de se séparer de la carrosserie.

9. Machine à laver selon l'une quelconque des revendications 4 à 8, dans laquelle la première partie de combinaison comprend un trou de combinaison (61e, 161e, 261a) à travers lequel passe l'élément de support.

10. Machine à laver selon l'une quelconque des revendications 5 à 9, comprenant en outre un premier élément de fixation (264) situé entre la carrosserie et l'élément de déformation afin de fixer l'élément de déformation.

11. Machine à laver selon l'une quelconque des revendications 5 à 10, comprenant en outre un deuxième élément de fixation (262) combiné à l'élément de déformation afin de fixer l'élément de support.

12. Machine à laver selon l'une quelconque des revendications précédentes, dans laquelle l'unité de mesure de déformation est combinée à une surface supérieure (100a) de la carrosserie.
